# EUROPEAN PATENT APPLICATION

(11) **EP 3 106 662 A1**
(43) Date of publication of application: **21.12.2016**
(21) Application number: 16169802.2
(22) Date of filing: 16.05.2016
(51) Int. Cl.: F03G 3/08, B60K 6/10

(54) **VEHICLE**

(30) Priority: 16.06.2015 GB 201510496
(71) Applicant: Edwards Limited, Crawley, Sussex RH10 9LW (GB)
(72) Inventor: SCHOFIELD, Nigel Paul, Burgess Hill, Sussex RH15 9TW (GB); GOODWIN, David John, Burgess Hill, Sussex RH15 9TW (GB)
(74) Representative: Norton, Ian Andrew

(57) **Abstract**

A vehicle 10 comprises a kinetic energy recovery system 12 having a flywheel 14 supported for rotation in a vacuum enclosure 18. A first vacuum pumping arrangement 34 evacuates the vacuum enclosure and a second vacuum pumping arrangement 38 of the vehicle evacuates the recovery system. The flywheel is supported for rotation on a common drive shaft 16 with the first vacuum pumping mechanism.

## Description

The present invention relates to a kinetic energy recovery system which may be used in a vehicle.

A kinetic energy recovery system (KERS) is used in vehicles to store energy by rotation of a flywheel, and is typically used to recover energy from a rotating part of the vehicle for example a drive shaft. In this example, a drive shaft is rotated by an engine to cause acceleration of the vehicle. During vehicle braking the energy of the rotating part is lost for instance as heat energy caused by friction between braking members. A kinetic energy recovery system is arranged to receive at least part of this lost energy and to return it to the rotating part when energy is required.

A recovery system comprises a flywheel supported for rotation about an axis. Energy is stored by increased rotational speed of the flywheel. The energy stored is proportional to the moment of inertia and the square of the angular velocity. In order to reduce the moment of inertia and therefore mass of the flywheel, the flywheel must be rotated at a high angular velocity to store sufficient energy (e.g. 100,000 rpm). At these high velocities, frictional resistance between a flywheel and ambient air generates large heat losses which decrease the efficiency of the recovery system. Therefore, the flywheel is located in a vacuum enclosure which is evacuated by a vacuum pump to reduce friction between the flywheel and the surrounding air. However, the energy required to operate the vacuum pump detracts from the energy which can be recovered and returned to other parts of the vehicle.

It is known from US-5,767,595 to provide a turbomolecular or molecular drag pump in the vacuum enclosure for rotation with the flywheel. In this system, the drag pump conveys any pumped gas to a second vacuum enclosure filled with molecular sieves to absorb said pumped gas. However, such systems require periodic replacement of the molecular sieves and complex arrangements to maintain the sieves' position in the chamber.

In a first aspect, the present invention provides a vehicle comprising a kinetic energy recovery system having a flywheel supported for rotation in a first vacuum enclosure for receiving energy from and dissipating energy to one or more parts of the vehicle, and a first vacuum pumping arrangement for evacuating the first vacuum enclosure, wherein the vehicle comprises a second vacuum pumping arrangement operable to provide a vacuum for use by a separate sub-system of the vehicle, the second vacuum pumping arrangement being connected for evacuation of the kinetic energy recovery system. The vehicle part which dissipates energy may be the same or a different part to the one that receives energy. The flywheel stores energy by rotation in proportion to its inertia and the square of its rotational speed and may receive energy mechanically from a rotating part of the vehicle or alternatively may be driven by an electrical motor and a generator which converts mechanical energy to electrical energy for driving the motor.

A second aspect of the present invention provides a vehicle comprising a kinetic energy recovery system having a flywheel supported for rotation in a vacuum enclosure for receiving energy from and dissipating energy to one or more parts of the vehicle and a first vacuum pumping arrangement for evacuating the vacuum enclosure, the first vacuum pumping arrangement comprising a drive shaft for driving rotation of a vacuum pumping mechanism, the flywheel being mounted for rotation on the drive shaft with the vacuum pumping mechanism such that energy received from or dissipated to one or more parts of the vehicle causes a respective increase or decrease in rotational speed of both the flywheel and the vacuum pumping mechanism.

The second vacuum pumping arrangement may be a primary (backing) vacuum pumping arrangement adapted to exhaust at atmosphere and the first vacuum pumping arrangement is a secondary vacuum pumping arrangement adapted to exhaust at a vacuum pressure lower than atmosphere. The secondary vacuum pump may operate less efficiently as its exhaust pressure approaches atmosphere, for example a regenerative pumping mechanism.

The second vacuum pumping arrangement may be connected for evacuating an exhaust of the first vacuum pumping arrangement or may evacuate the vacuum enclosure.

A valve arrangement may be operable for selectively causing gas communication between the second vacuum pump and the kinetic energy recovery system. The valve arrangement may comprise a one-way valve for allowing gas flow from the kinetic energy recovery system towards the second vacuum pump and resisting gas flow from the second vacuum pump towards the kinetic energy recovery system.

There may be a gas line along which gas can flow between the kinetic energy recovery system and the second vacuum pump, the gas line having an internal volume which is sized relative to the internal volume of the kinetic energy recovery system to reduce the transfer of fluctuations in the pressure generated by the second vacuum pump to the kinetic energy recovery system. The gas line may comprise an expansion tank for evacuation by the second vacuum pump and for absorbing said pressure fluctuations.

The first and second aspects of the invention may be combined to provide a vehicle wherein the flywheel and first vacuum pumping arrangement are mounted on a common drive shaft such that energy received from or dissipated to one or more parts of the vehicle causes a respective increase or decrease in rotational speed of both the flywheel and the first vacuum pumping arrangement.

The first vacuum pumping arrangement may comprise a regenerative pumping mechanism comprising an array of rotor formations on a rotor for aerodynamic interaction with one or more stator channels on a stator for pumping gas from the vacuum enclosure.

Preferred or optional aspects of the invention are defined in the accompanying claims.

In order that the present invention may be well understood, some embodiments thereof, which are given by way of example only, will now be described with reference to the accompanying drawing, in which:

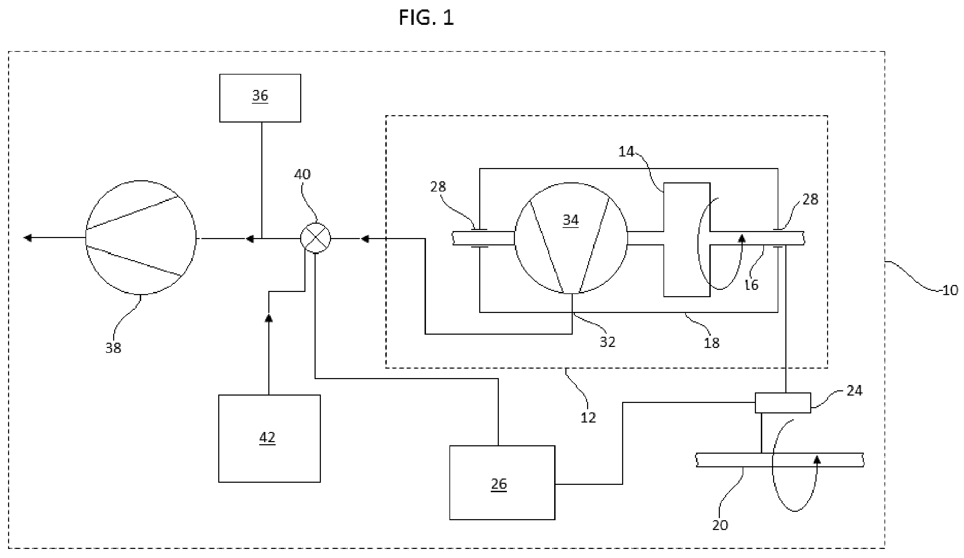

Figure 1 is a schematic representation of a vehicle comprising a recovery system.

Referring to Figure 1, a vehicle 10 is shown schematically, which may be an automotive land vehicle, or other type of vehicle in which it is of benefit to capture kinetic energy of the vehicle and selectively release it for improving the performance of the vehicle or conserving energy. Recovery systems of this type are particularly prevalent in racing cars, although they have increasing applicability to energy conservation generally, for example public transportation buses.

Whilst not shown the vehicle typically comprises a plurality of wheels, an engine or power source for driving rotation of the wheels for increasing the vehicles speed, a vehicle drive shaft for transmitting energy from the engine to the wheels and a braking arrangement for reducing rotation of the wheels for decreasing propulsion. Some of these elements may be replaced in other types of vehicle, such as air or water borne vehicles.

The vehicle 10 comprises a kinetic energy recovery system (KERS) 12 having a flywheel 14 supported for rotation by a flywheel shaft 16. The flywheel is arranged to receive energy from a part of the vehicle, such as a drive shaft 20 or other internally moving or rotating part, driven by a vehicle motor, engine or battery and dissipate energy to one or more parts of the vehicle, whether that is the same part or a different part or subsystem of the vehicle.

The recovery system may receive mechanical energy from a rotating or other internally moving part of the vehicle by mechanical connection with that part. Alternatively or additionally, the energy received by the recovery system may be received by an electrical connection. In this latter regard, a part of the vehicle which has kinetic energy may transfer its energy to electrical energy, for example by an alternator, and that electrical energy drives a motor of the flywheel. The arrangement of Figure 1 applies equally to mechanical or electrical transfer of energy to or from the recovery system.

Referring again to Figure 1, the recovery system 12 is selectively connected or disconnected from the vehicle part 20, dependent on whether the flywheel is imparting or receiving mechanical (momentum) or electrical energy in a connected condition or if the recovery system is isolated from other parts from the vehicle in a disconnected condition.

Hence, the kinetic energy system receives energy from other parts of the vehicle when the energy is not otherwise usefully required and returns useful momentum or stored energy to other parts of the vehicle at any point it is usefully required to power the vehicle.

In Figure 1, the drive shaft 20 is represented schematically as a moving part of the vehicle having kinetic energy for connection with the KERS. Component 24 in a mechanical arrangement connects to the flywheel 14 by a gear mechanism for geared rotation of the drive shaft relative to the flywheel. In this regard, the flywheel is typically arranged to rotate faster than the rotating part of the vehicle, for example between about 50,000 and 100,000 rpm compared to the drive shaft which may rotate at about 1000 to 20,000 rpm. In the mechanical arrangement component 24 comprises a clutch mechanism which selectively connects the rotating part to the flywheel for connection in the energy receiving condition or energy imparting condition or disconnects the flywheel in the disconnected condition. The clutch mechanism is operable by a control 26 according to determined characteristics of the vehicle or system or to input by a user of the system. In this regard, the control may receive input from one or more sensors of the vehicle (not shown) to determine operation of the KERS in any one of the energy receiving condition, energy imparting condition or the disconnected condition. These characteristics include by way of example the relative rotational speed or momentum of the flywheel 14 and the rotating part 20, acceleration of the vehicle, engine air compressor or the state of other subsystems of the vehicle. The control 26 may be a specially programmed digital processing unit forming part of a vehicle management system or may be a bespoke unit for controlling activation of the KERS.

In an alternative arrangement, component 24 is modified and may convert mechanical energy to electrical energy, by for example an alternator, for use by an electrical motor for driving rotation of the flywheel. The motor may form part of the KERS and the alternator may be part of a separate sub-system of the vehicle. Mechanical energy from the flywheel may be transferred directly to a moving or rotating part of the vehicle or may first be converted to electrical energy for transfer to the moving or rotating part or for use by an electrical component for example by an electric motor in a hybrid vehicle.

Referring again to Figure 1, in the energy imparting and receiving conditions, the flywheel shaft 16 is connected to the rotating part 20 through component 24. The flywheel 14 is located in a vacuum enclosure 18 and the flywheel shaft extends through an opening in the enclosure and has a portion external to the enclosure which is driven by or from the drive shaft as illustrated in Figure 1. The opening comprises a shaft seal 28 for resisting the passage of ambient gas into the enclosure. The flywheel shaft is supported for rotation by bearings (not shown).

In an alternative arrangement, the KERS comprises an electrical motor and generator arrangement which in combination can receive either electrical or mechanical energy for transmission to the flywheel or dissipate mechanical or electrical energy from the flywheel. In this alternative arrangement, the connection to the flywheel is electrical and therefore the vacuum enclosure can be substantially sealed reducing leakage of gas from the enclosure.

In use the vacuum enclosure is reduced to a pressure less than atmosphere and preferably to a vacuum pressure of about 1 mbar, more preferably to a pressure of about 0.1 mbar and still more preferably to a pressure of 10⁻² mbar or lower. This decreased pressure allows the flywheel to rotate with reduced gas friction and thermal losses and increases the amount of energy which can be captured and imparted to the system. Although a lower pressure decreases energy losses, the decreased pressure in the vacuum enclosure is generated by a vacuum pumping arrangement and the vacuum pumping arrangement requires energy for its operation. The energy required for operation of the vacuum pumping arrangement decreases the efficiency of the recovery system.

A first vacuum pumping arrangement 34 for a recovery system as described above comprises a pumping mechanism supported for rotation for pumping gas from an outlet 32 of the enclosure. In this example, the shaft of the vacuum pump arrangement is common with the flywheel shaft 16 such that energy received from or dissipated to one or more parts of the vehicle causes a respective increase or decrease in rotational speed of both the flywheel and the first vacuum pumping arrangement. Mounting the components on the same shaft 16 provides a compact solution and works well if the pumping mechanism is suited for rotation at the speeds required by the flywheel. In a preferred arrangement, the first vacuum pumping arrangement comprises a regenerative pumping mechanism, as disclosed for example in the applicant's earlier published patent WO2004/055377, the contents of which are incorporated herein by reference and for brevity will not be repeated in the present application. Briefly, the regenerative pumping mechanism comprises an array of rotor formations on a rotor for aerodynamic interaction with one or more stator channels on a stator for pumping gas from the vacuum enclosure. Typically, there is a plurality of rotor blade arrays received in a respective plurality of stator channels generating on rotation a gas vortex which serves to compress gas between an inlet and outlet of the arrangement. In addition to a regenerative pumping mechanism, a molecular drag pumping mechanism may be provided on the drive shaft upstream of the regenerative pumping mechanism. The molecular drag mechanism may be any one or more of a Holweck, Seigbahn or Gaede mechanism all of which are known per se in the vacuum pumping art and therefore need not be described in this application.

The internal pressure of the vacuum enclosure 18 is generally isolated from ambient pressure however gas pressure increases due to leaks into the enclosure through the shaft seals 28 or by pressure increase due to outgassing in the enclosure from liquid such as lubricant or from solids such as carbon fibre components. Therefore, when the system is active for example at 10⁻² mbar the vacuum pumping arrangement 34 is required to evacuate only outgases or that gas that has leaked into the enclosure in order to attain or to maintain the low pressures required in the enclosure for energy efficiency.

However at other times, when the system is at rest, at initial conditions or during infrequent use, the vacuum enclosure may be at or close to atmosphere. Therefore, before effective operation, the vacuum pumping arrangement may be required to evacuate the enclosure from ambient pressure, or close to ambient pressure, to the required operating pressure of for example 10⁻² mbar (i.e. a reduction to a hundred thousand of initial pressure).

Existing vacuum pumping arrangements are required to exhaust at atmosphere (i.e. approximately 1 bar). In this regard, at least the downstream, exhaust, stage or stages of the vacuum pumping mechanism are close to atmosphere and are required to pump at high pressures, which in turn require high torque, produce greater heat and reduce the efficiency of the recovery system. In the present arrangement however, the exhaust of the first vacuum pumping arrangement is evacuated by a second, separate, vacuum pumping arrangement so that the downstream stages are pumping at lower pressure requiring less torque and consumption of energy.

Although not shown, the inlet pressure (or enclosure pressure) of the first vacuum pumping arrangement may be reduced by the separate second vacuum pumping arrangement, preferably prior to operation of the first vacuum pumping arrangement to allow its operation only in a low pressure regime which requires less torque and consumes less energy than in known examples.

Known motor land vehicles comprise a multiplicity of subsystems including for example a power steering mechanism, an active suspension mechanism and a braking mechanism. There are some subsystems which either operate in a low pressure regime generated by a separate vacuum system (e.g. a braking system) or produce vacuum as a by-product of their operation (e.g. a petrol engine). In the latter regard, the generated vacuum can be used to provide a roughing vacuum for the KERS. In other subsystems a vacuum arrangement is provided which is capable of generating gas pressures less than atmosphere. The vehicle system 10 comprises for example a braking mechanism 36 which is assisted by a vacuum pumping arrangement 38. The braking mechanism may be a servo braking mechanism. The vacuum pumping arrangement 38 is configured to provide relatively low vacuum pressures in the order between less than 1 bar to about 0.1 bar and does not therefore generate the much lower pressures required in the recovery system. However, the braking mechanism is not in continual use in a vehicle or other system and therefore has in typical cases capacity which is not utilised. Although the vacuum pumping arrangement 38 is configured to act in a low vacuum regime because its capacity is not fully utilised it can usefully be used to increase the efficiency of the recovery system 12 by generating a roughing pressure (between about 1 bar and 0.1 bar) in the vacuum enclosure 18 or at the exhaust 32 of the regenerative pumping mechanism of first vacuum pumping arrangement 34. Therefore, the vacuum pumping arrangement 38 can be used to evacuate the exhaust of the vacuum pumping arrangement 34 so that the exhaust stage or stages of the latter pump are not required to pump gas at atmosphere. Therefore, the energy which the vacuum pumping arrangement 34 requires for operation is reduced thereby contributing to the overall efficiency of the recovery system.

The auxiliary or second vacuum pumping arrangement may comprise a mechanical pumping mechanism, such as a blower, vane or screw; or an air ejector pump associated with the compressed air sub-system of the vehicle. In other examples, the second vacuum pumping arrangement may generate a sufficient roughing vacuum as a by-product of its primary use. In this regard, the vacuum pressure created by a petrol driven engine can itself generate sufficient roughing pressure for use in the present kinetic energy recovery arrangement.

Referring again to the detail of Figure 1, the auxiliary or second vacuum pumping arrangement 38 is connected to a subsystem of the vehicle 10 by a vacuum line and in the illustrated example the subsystem is a brake mechanism 36. The second vacuum pumping arrangement is typically specified to meet the peak demand of the brake mechanism and it will be appreciated that the brake mechanism is not in continuous use and when in use does not always require peak vacuum. Therefore, the second vacuum pumping arrangement is connected by a valve 40 to the recovery system 12. The valve may be simple and inexpensive one-way or non-return valve responsive to pressure difference on either side of the valve. In the example shown the second vacuum pumping arrangement is connected to the exhaust 32 of the first vacuum pumping arrangement 34. In an alternative or additional arrangement, the second vacuum pumping arrangement may be connected to the vacuum enclosure 18 for evacuating the enclosure and the inlet of the first vacuum pumping arrangement 34.

The valve 40 selectively isolates the second vacuum pumping arrangement 38 from the recovery system 12 so that when reduced pressure is required by the braking mechanism 36 it is available. In this regard it is clearly more important that the braking system is fully functional than it is to recover energy in the recovery system 12. The valve may be operably connected to the control 26 and activated or deactivated depending on the relative requirements of the subsystem 36 and the recovery system 12. In one example, the valve is open when the braking system is not in use and is closed when the braking system is in use. However, there may be occasions in which the second vacuum pumping arrangement 38 is required to evacuate the vehicle subsystem 36 at the same time as the recovery system 12. Therefore, in the preferred example shown, an auxiliary vacuum chamber, or expansion tank, 42 is provided for evacuation by the second vacuum pumping arrangement when the vehicle subsystem is not in use. The valve 40 is configured for selectively connecting the second vacuum pumping arrangement with the auxiliary vacuum chamber or the recovery system 12 and the recovery system 12 with the auxiliary vacuum chamber. The recovery system 12 can be evacuated into the volume of the auxiliary vacuum chamber 42 and in this way, the recovery system 12 and the vehicle subsystem 36 can be evacuated at the same time.

### Key to Features in Figures

10. Vehicle (bus, racing car etc.)
12. Kinetic Energy Recovery System (KERS)
14. Flywheel
16. Flywheel Shaft
18. Vacuum Enclosure
20. Rotating Vehicle Part (Drive Shaft etc.)
24. Vehicle component (Clutch mechanism, Alternator tc.)
26. Control Device
28. Shaft Seal
32. Vacuum Enclosure Outlet
34. First Vacuum Pumping Arrangement (molecular drag/regenerative pumping mechanism)
36. Braking Mechanism
38. Second Vacuum Pumping Arrangement
40. Valve
42. Expansion Tank/Auxiliary Vacuum Chamber

## Claims

1. A vehicle comprising a kinetic energy recovery system having a flywheel supported for rotation in a vacuum enclosure for receiving energy from and dissipating energy to one or more parts of the vehicle, and a first vacuum pumping arrangement for evacuating the vacuum enclosure, wherein the vehicle comprises a second vacuum pumping arrangement operable to provide a vacuum for use by a separate sub-system of the vehicle, the second vacuum pumping arrangement being connected for evacuation of the kinetic energy recovery system.

2. A vehicle as claimed in claim 1, wherein the second vacuum pumping arrangement is a primary vacuum pumping arrangement adapted to exhaust at atmosphere and the first vacuum pumping arrangement is a secondary vacuum pumping arrangement adapted to exhaust at a vacuum pressure lower than atmosphere.

3. A vehicle as claimed in claim 1 or 2, wherein the second vacuum pumping arrangement is connected for evacuating an exhaust of the first vacuum pumping arrangement.

4. A vehicle as claimed in any of the preceding claims, comprising a gas line along which gas can flow between the kinetic energy recovery system and the second vacuum pump, the gas line having an internal volume which is sized relative to the internal volume of the kinetic energy recovery system to reduce the transfer of fluctuations in the pressure generated by the second vacuum pump to the kinetic energy recovery system.

5. A vehicle as claimed in claim 4, wherein the gas line comprises an expansion tank for evacuation by the second vacuum pump and for absorbing said pressure fluctuations.

6. A vehicle as claimed in any of the preceding claims, wherein the flywheel and first vacuum pumping arrangement are mounted on a common drive shaft such that energy received from or dissipated to one or more parts of the vehicle causes a respective increase or decrease in rotational speed of both the flywheel and the first vacuum pumping arrangement.

7. A vehicle as claimed in any of the preceding claims, wherein the first vacuum pumping arrangement comprises a regenerative pumping mechanism comprising an array of rotor formations on a rotor for aerodynamic interaction with one or more stator channels on a stator for pumping gas from the vacuum enclosure.

8. A vehicle comprising a kinetic energy recovery system having a flywheel supported for rotation in a vacuum enclosure for receiving energy from and dissipating energy to one or more parts of the vehicle and a first vacuum pumping arrangement for evacuating the vacuum enclosure, the first vacuum pumping arrangement comprising a drive shaft for driving rotation of a vacuum pumping mechanism, the flywheel being mounted for rotation on the drive shaft with the vacuum pumping mechanism such that energy received from or dissipated to one or more parts of the vehicle causes a respective increase or decrease in rotational speed of both the flywheel and the vacuum pumping mechanism, wherein the vehicle further comprises a second vacuum pumping arrangement operable to provide a vacuum for use by a separate sub-system of the vehicle, the second vacuum pumping arrangement being connected for evacuation of the kinetic energy recovery system.
